# EUROPEAN PATENT APPLICATION

(11) **EP 1 286 429 A2**
(43) Date of publication of application: **26.02.2003**
(21) Application number: 02255665.8
(22) Date of filing: 14.08.2002
(51) Int. Cl.: H01R 13/66

(54) **Arc prevention circuits**

(30) Priority: 14.08.2001 US 312267 P; 22.04.2002 US 127869
(71) Applicant: Tyco Electronics Corporation, Middletown, Pennsylvania 17057 (US)
(72) Inventor: Bryan, Lyle Stanley, Winston Salem, NC 27101 (US); Patterson, Jeremy Christin, McLeansville, NC 27301 (US); Fry, Charles David, New Bloomfield, PA 17068 (US); Hermann, Henry Otto, Jr., Elizabethtown, PA 17022 (US)
(74) Representative: Warren, Keith Stanley

(57) **Abstract**

Arcs are prevented as electrical connectors are unmated by including a long (X4) and a short contact (X2) in an electrical connector with both contacts being connected along the same line between an electrical source (V1) and a load (R1,L1). The short contact (X2) comprises the lower resistance path between the source and the load and so carries most of the current when the connectors are fully mated. An FET is connected to the long contact (X4). As the short contact is disconnected, the FET initially carries sufficient current to prevent arcing at the short contact. Current through the FET decays rapidly so that when the long contact (X4) is subsequently disconnected, the electrical energy in the short contact is reduced below an arcing threshold.

## Description

### BACKGROUND OF THE INVENTION

Contacts carrying significant amounts of power will arc when disconnected. The amount of arc damage experienced by the contacts depends on their physical structure, the load current, the supply voltage, the speed of separation, the characteristics of the load (resistive, capacitive, inductive) as well as many other less significant factors.

Future automobile systems are expected to utilize 42 volts in order to reduce the load currents and the associated wiring losses. This increased voltage will cause significant arc damage to occur to the present connectors designed for 12-volt operation. To avoid the possible liabilities associated with catastrophic connector failure, automotive manufacturers are requesting a new connector design that can be hot-swapped some significant number of times. Specific requirements have not been settled yet but 20 cycles is the presently considered minimum.

There are many things, known in the power utility profession, that will quickly extinguish an arc and many things known in the relay industry that will minimize arc damage to connectors and contacts. These can be found in literature such as Gaseous Conductors by James D. Cobine and the Ney Contact Manual by Kenneth E. Pitney. Most of these methods are not practical in typical smaller electrical connectors such as those used in automobiles, computers and appliances. None of them will eliminate arcing. In fact, even contacts that are rated for current interruption use in such smaller power connectors will be destroyed by interrupting their rated currents often enough or slowly enough. There is a finite life for existing connectors since arcing will occur and cause damage each time the connector is disconnected.

The purpose of this invention is to prevent an arc from starting. This will prevent life-shortening damage to contacts. It is a further purpose to accomplish this by a means that can be contained within a typical connector.

While the initial goal that inspired this invention is for a 42-volt automotive connector, it is by no means limited to that area of application. Any power connector can benefit from this invention. Furthermore, this circuitry can also be easily applied to both electrical switches and relays.

### SUMMARY OF THE INVENTION

An electrical connector assembly comprises a first connector connected to an electrical source and a second electrical connector connected to a load. The second connector includes a short contact and a long contact. Both the long and the short contacts are connected to the electrical source on the same line. The short contact forms a lower resistance path between the source and the load when both the short and long contact are connected to the first connector. The short contact is disconnected from the first connector before the long contact is disconnected as the connectors are unmated. An electronic component is connected to the long contact, and is turned on to carry current as the short contact is disconnected and before arcing occurs on the short contact. Current through the electronic component decays while the long contact remains connected to the first connector so that when the long contact is disconnected from the second connector, the electrical energy carried by the long contact is reduced below an arcing threshold.

With the present invention, firstly, arcing is eliminated and not just limited. This prevents rather than minimizes contact damage. Secondly, this invention can be integrated into a typical electrical connector to produce a connector that is truly safe for circuit interruption. It can also be integrated into switches and relays.

### BRIEF DESCRIPTION OF THE DRAWINGS

Figure 1 is a diagram illustrating an arc prevention circuit according to the invention and including an FET.
Figure 2 is a plot of FET V_{DS} and I_{DS} as two connectors are disconnected.
Figure 3 is a plot of FET V_{G} and Load Vₒᵤₜ.
Figure 4 is a diagrammatic view of short and long contacts used with a positive temperature coefficient resistor in an alternative embodiment of this invention.
Figure 5 is a view of an arc prevention circuit of another embodiment employing a normally open relay.

### DETAILED DESCRIPTION OF THE PREFERRED EMBODIMENT

Before any explanation of how this invention can prevent arcing can be understood, some basic principles of the physics of arcing contacts must be known. There are several conditions that must be met in order to initiate an arc. An arc requires a gaseous ionized path between the electrodes. To create that path in air at standard temperature and pressure (STP) requires a voltage in excess of 300 volts. There is also the requirement to have at least 100 milliamperes of current to flow in the ionized path in order to sustain a true arc.

Because of the high voltage required to initiate an arc between separated electrodes, it might seem that there should be no arcing at any voltage below the 300-volt threshold. This is true for contacts that are already separated when voltage is applied in air at STP. It is not the situation for contacts that are separated while they are carrying current. When current carrying contacts are separated the last microscopic points of contact are superheated, releasing some metal ions into the gap. With these 'seed ions', a conductive path is established and an arc can form. This is why an arc will form when contacts are separated, but not as they are connected, if the voltage is below 300 volts. There are actually some brief intermediate steps between the initial release of the metal ions and the establishment of a true arc. These steps are low in energy and cause no significant problem to typical power contacts.

The true arc is what has the very high temperature (tens of thousands of degrees in the arc channel) that does the damage to contacts. More than a 9-volt potential difference is required between the electrodes for a true arc to form. If the potential difference is prevented from reaching that initiation level until the contacts separate just a bit more, thus breaking that microscopic conduction path, no arc can form. This is the principle employed by the present invention.

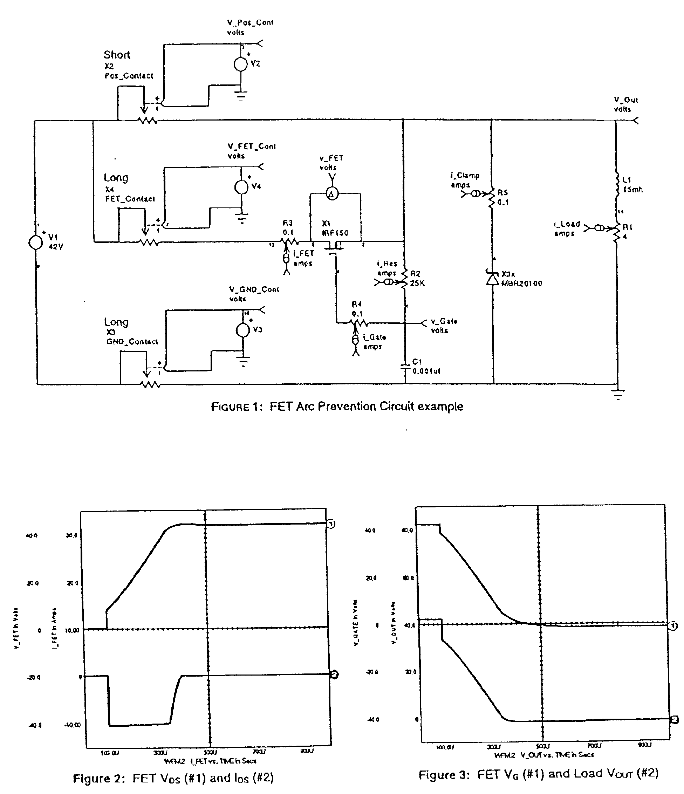

The basic operation of the invention is firstly to provide a connection that allows an FET to shunt the first power contact pair (typically the positive power supply line) to separate during disconnection. Secondly, the FET must be adequately turned on before arc potentials can develop between the separating contact pair. This is less than 10 volts. Thirdly, the FET must be turned off so that the load current can decay to zero before the second contact pair (typically the ground or return line) separates. The schematic of figure 1 will be used to describe an example of how this is accomplished by the invention.

In Figure 1, certain wiring and devices, such as the typical power source V1, load R1, L1 and interconnecting wiring are employed in a standard 42 volt electrical system including connectors. Alone, the first contact to open would experience an arc and sustain substantial damage. The load is comprised of both a 4-ohm resistor and a 15mH inductor. The resistor represents a load that draws a little over 10 amps. The inductor represents the inevitable inductance that is considered to exist in typical automotive wiring.

Certain other components, shown in Figure 1, are included to permit SPICE software to control and measure various parts of the circuit. Examples of these are the voltage sources V2, V3, V4 that drive the potentiometers, the current measurement probes attached to the resistors and the various voltage measurement points.

The potentiometers represent the contacts that will separate during the simulation. Note that the contacts have different lengths. One is shorter than the others to assure that it will separate first. The difference in length may be on the order of 1.27mm (0.05) inches but the exact dimension is not critical to the invention. Potentiometers are used instead of switches because they provide better stability to the SPICE software during transient simulations. SPICE typically will fail to be able to resolve a solution when there are discontinuities such as suddenly opening a switch. These potentiometers are 100K devices and are changed from zero ohms to 100K ohms in one nanosecond to represent a contact being opened.

Other wiring and devices are only required by this invention if there is a significant amount of inductance in the load. The schottky diode quickly clamps any over-voltage and oscillations induced by the inductance. The specific one selected in this example is an MBR20100 Schottky diode rated for 100V and 20A. This specific device is not essential to the invention. It is only a device with adequate capabilities that was available in the SPICE library. Many times such diodes are included as integral parts of loads that are highly inductive. That could remove the requirement for this diode. The 0.1 ohm resistor R5 represents wiring resistance as well as a place to monitor the current through the diode during a simulation. It is not a component that would be intentionally placed in this circuit.

Additional wiring and devices comprise elements of this invention. Firstly, there is what is identified as the FET_Contact device X4. It is another potentiometer representing an additional contact added to the connector. This contact provides the connection to the left, source side of the separating power supply contact device X2 - Pos_Cont, after that contact has separated from its mating, load side half. This added contact, must remain closed after the first power contact X2 opens; hence it must be longer. The ground, or return contact X3, should be approximately the same length as the FET contact X4, so that the only open connection, during the initial period of the disconnect operation, is the one power supply contact X2.

Next, the 0.1 ohm resistor R3 again represents wiring resistance as well providing a place to monitor the current through the FET during a simulation. It is not a component that would be intentionally placed in this circuit. The IRF150 N-Channel MOSFET is rated for 100V and 10A and has an on resistance of 0.055 ohms. It is connected between the source side, through contact X4, and the load side of the power supply contact X2. This specific device is not essential to the invention. It is only a device with adequate capabilities that was available in the SPICE library. The device used in any product using this invention needs to be rated for the voltage and current that the connector is intended to handle.

The 25K-ohm resistor R2 and the 0.001-microfarad capacitor C1 provide the gate voltage for the FET. The capacitor is initially charged to the load voltage through R2. When contact X2 opens, the FET drain voltage falls toward ground potential. The charge on C1 provides the gate voltage to turn on the FET so that the separating contacts are shorted by the FET. This capacitor is discharged through R2 as the load voltage falls toward zero. Component values and representative assumptions employed in conjunction with this circuit are compiled in Table 1.

When the connector has been mated a quiescent state is established. In that state all contacts are closed. The full source voltage is across the load. Capacitor C1 and all terminals of the FET are also at the full source voltage. This leaves the FET turned off but the source contact pair X2 shunts it and is carrying the load current.

When contact X2 opens, the load voltage and the FET source terminal begin to fall toward zero while the FET drain (still connected to the source through contact X4) and gate (connected to C1) voltage remain at the source voltage. This is when the schottky diode X3, in conjunction with the reverse current protection diode that is internal to the FET, do their clamping of any surge voltage that would be induced by load inductance.

The FET source voltage falls rapidly until V_{GS} reaches a level that can turn on the FET. In this example, this occurs when there is about 8 volts across the opened source contact pair X2. (See figure 2) Since this voltage is below the arc threshold voltage, no arc will be initiated. The FET takes over the job of carrying the decaying current to the load.

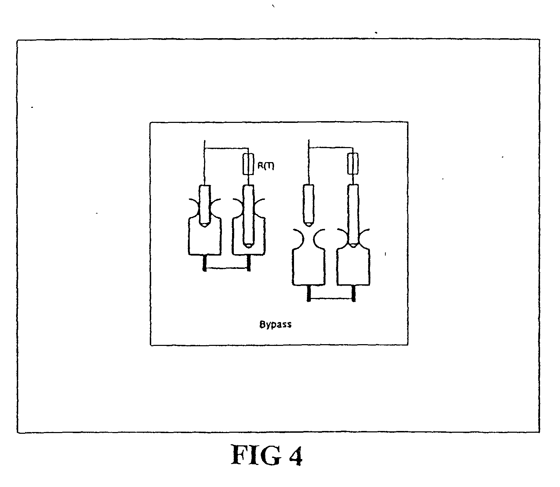

Figure 3 shows how the FET gate voltage falls, turning the FET off in about 300 microseconds (µs). This time delay is much longer than would be expected from the time constant of R2 and C1. This is because the load voltage is decreasing slowly and therefore R2 is pulling C1 to that falling voltage rather than to ground. This circuit is effectively stretching its own time constant. This slow turn off in conjunction with the previously mentioned diodes allows even an inductive load to experience a smoothly falling voltage as seen in the figure.

After the load current has been brought below about 100 milliamperes, the FET contact X4 and the ground contact, X3 can be disconnected with no possibility of arcing. Even at the extremely fast disconnect velocity of 1 meter-per-second, the 300µs delay only requires a length difference of 0.3mm (0.012 inches), which is less than typically used in staggered connectors. Any greater length will cause no problem since a quiescent state with no current flowing is established after the 300µs delay.

During this entire disconnect process, the voltages across and currents through all contacts are kept below the known arc thresholds of 9V and 0.1A as they are separated. Therefore, there will be no arcing. Also, the total energy required to be dissipated in the FET during its brief active state is less than 60 milli-Joules in this example. This is not enough energy to raise a 2mm x 10mm x 10mm piece of copper even 0.1°C. This circuit is therefore not only capable of preventing arcing but it also can fit readily into a connector.

Having understood the operation of the invention during the critical disconnect operation, it is necessary to be sure that no faults will exist during mating. In the operation of mating, the long contacts X3 and X4 will connect first. The ground contact X3 will have no potential across it other than whatever ESD (electrostatic discharge) could be between the units being connected. Current flow through the FET contact X4 will consist only of the leakage current through the turned off FET. No damage can result to the devices in the arc elimination circuitry under this condition.

When the source power contact X2 closes, power will flow to the load and the arc elimination circuitry. Since the gate voltage will lag behind the source voltage due to R2 and C1, the FET will remain off. Even if it would turn on, the FET is shunted by the power contacts and it can not be carrying any significant current. After less than a millisecond, capacitor C1 will be charged but the FET gate terminal voltage will remain at or slightly below the source terminal voltage and the circuitry will enter a quiescent state with the FET turned off. Everything will remain in that condition until the connector is disconnected.

Since power can only be dissipated in the FET for a controlled and very short time during a disconnect operation and no significant power will be dissipated during a connect operation, there are no unsafe modes for the circuit to enter. There is only a very short dynamic operation during a disconnect operation and the circuit is essentially off at all other times. Simulations have been run for each condition. Both very fast and very slow connect/disconnect velocities were evaluated as well as stopping in a partially mated condition. No damaging conditions could be found in the circuitry.

To search for further possible fault conditions, the relative lengths of the FET X4 and ground X3 contacts were varied. As expected, it was observed from the simulations that no adverse conditions were encountered. Consequently, there is no requirement in this invention for those two contacts to be the same or different lengths relative to one another. All that is required is that the shortest one of those contacts not separate until after the load current has sufficiently decayed to about 100 milliamperes. Traditional practice would expect, however, that the ground contact would be designed to be the first one to connect and the last one to disconnect; that is, it is generally the longest contact.

The semiconductor devices only need to handle the momentary peak current and voltage. There is no significant power to dissipate. The circuitry, less the capacitor, can easily be produced in a single package just as smart power devices are already made. The capacitor can be reduced in value by modifications to the circuit that are well known in the IC and electronics industries and are not significant to this invention. If reduced enough, it can also be integrated into the device IC. If not, it will still be a small component that, along with the small active device IC, can easily be packaged into a typical power connector.

As explained in this example, the invention has been applied to a power connector, such as would be needed in a 42-volt automotive application. It is not limited to that application area. Power connectors for other applications could obviously directly benefit from this invention. Also, the described embodiment of this invention is for a specific type of current - 42-volt DC power - and of one particular polarity. It should be obvious that this same type of circuit can be easily modified to work for other voltages and currents and the opposite DC polarity. It can also be enhanced to provide the same protection to AC circuits.

Finally, this same solution can also be applied to relays, switches and any other device that must break a current carrying circuit. In fact, relays and switches will need only the electronic circuit. No additional contact is required since both halves of the connection remain in the same physical location in those devices. Only in an application where the separating halves of the connection are being physically removed from one another would the addition of the extra and longer FET contact be required.

Another embodiment, shown in Fig. 4, introduces a temperature dependent resistor R(T) in the make first, break last contact. When the normal contact gets unmated the current will pass through the make first, break last contact. At this point resistance is low. When the current warms up the resistor, its resistance will increase and the current is decreased. When the make first, break last contact also gets unmated, the resistance in the circuit is high enough that arcing will be suppressed. During the mating operation there will be arcing for a short time (that is, the time it takes to warm up the resistor). A Polyswitch® device may also be used in place of the resistor depending on the current load.

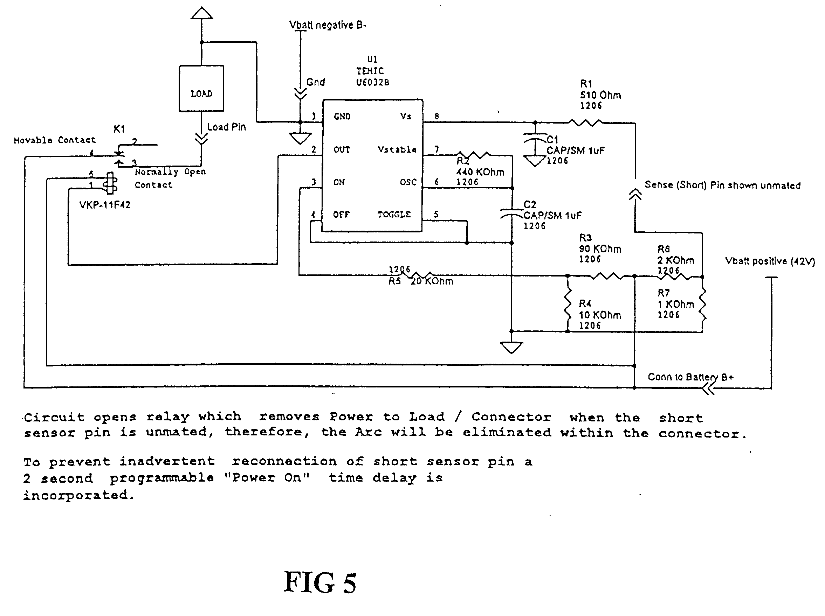

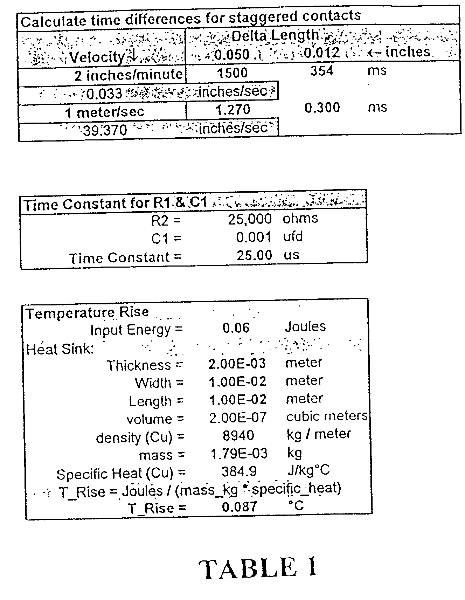

Figures 5 shows another alternative embodiment. A short (break first) pin is connected to an electrical circuit. When this short pin is unmated, it will enable the electrical circuit to shut off power to the remaining load pins within the connectors. The circuit opens a relay, which removes power to the load / connector when the short sensor pin is unmated, therefore the arc will be eliminated within the connector. To prevent inadvertent reconnection of the short sensor pin, a two second programmable "Power On" time delay is incorporated. Experimentation has indicated, however, that the time delay circuit may be unnecessary. This circuit may be able to handle multiple loads and sensor pins with one unit. The approach shown in Figure 5 appears to have the following advantages.
- Solution appears to be feasible and can be an economical solution.
- Circuit can react quickly enough to totally eliminate arcing in the connector.
- Utilizes existing components.
- Fully automatic and programmable.
- Can be used with existing connector designs.

## Claims

1. An electrical connector assembly comprising a first connector connected to an electrical source and a second electrical connector connected to a load, the second connector including a short contact and a long contact, both the long and the short contacts being connectable to the electrical source on the same line, the short contact forming a lower resistance path between the source and the load when both the short and long contact are both connected to the first connector, the short contact being disconnectable from the first connector before the long contact is disconnected as the connectors are unmated, and an electronic component connected to the long contact, which is turned on to carry current as the short contact is disconnected and before arcing occurs on the short contact, current through the electronic component decaying while the long contact remains connected to the first connector so that when the long contact is disconnected from the second connector, the electrical energy carried by the long contact is reduced below an arcing threshold.

2. A method of preventing arcing between contacts in mating electrical connectors comprising the steps of providing a long contact and a short contact in one electrical connector, the long contact and the short contact being connected to an electrical source along a single line; unmating the mating connectors with the short contact being disconnected prior to the long contact; positioning an electronic component in the one electrical connector with the electronic component being connected between the long contact and an electrical load; activating the electronic component prior to complete disconnection of the short contact to carry all current between the electrical source and the electrical load through the long contact; and disconnecting the long contact after current through the electronic component has decayed below an arc threshold level.

3. A circuit for preventing arcing when electrical connectors are unmated, the circuit comprising a short contact and a long contact connected along the same line between a source and a load, and a component connected in series with the long contact, the component carrying sufficient current when the short contact is disconnected to prevent arcing at the short contact and carrying a decaying current when only the long contact is connected between the source and the load so that electrical energy carried by the long contact diminishes below an arc initiation threshold before the long contact is disconnected.
